# EUROPÄISCHE PATENTSCHRIFT

(11) **EP 2 385 915 B1**
(45) Veröffentlichungstag und Bekanntmachung des Hinweises auf die Patenterteilung: **07.11.2012**
(21) Anmeldenummer: 09748124.6
(22) Anmeldetag: 10.11.2009
(51) Int. Cl.: B60W 50/14

(54) **Verfahren und Steuergerät zur Erkennung eines gefährlichen Fahrzustandes eines Fahrzeugs**
Method and controller for identifying a dangerous state of travel of a vehicle
Procédé et appareil de commande pour la détection d'un état de danger relatif à un véhicule en circulation

(30) Priorität: 08.01.2009 DE 102009000079
(43) Veröffentlichungstag der Anmeldung: 16.11.2011
(73) Patentinhaber: Robert Bosch GmbH, 70442 Stuttgart (DE)
(72) Erfinder: LICH, Thomas, 71409 Schwaikheim (DE); KOLATSCHEK, Josef, 71263 Weil Der Stadt (DE)
(86) Internationale Anmeldenummer: PCT/EP2009/064913
(87) Internationale Veröffentlichungsnummer: WO 2010/078987

(56) Entgegenhaltungen:
- EP-A2- 1 538 019
- EP-A2- 1 582 440
- US-A- 6 014 595

## Beschreibung

### Stand der Technik

Die vorliegende Erfindung bezieht sich auf ein Verfahren gemäß Anspruch 1, ein Steuergerät gemäß Anspruch 9, ein Computerprogrammprodukt gemäß Anspruch 10 sowie auf eine Vorrichtung gemäß Anspruch 11.

### Offenbarung der Erfindung

Untersuchungen der Unfallforschung zeigen, dass das Verlassen der Fahrbahn eines Fahrzeugs eine der häufigsten Unfallursachen im Verkehrsgeschehen darstellt und damit auch für eine nennenswerte Anzahl an Verletzungen oder gar Todesopfern unter den Verkehrsteilnehmern verantwortlich ist.

Heutzutage existieren eine ganze Reihe von Systemen, die sich zur Aufgabe gestellt habe, dass Verlassen der Fahrbahn zu erkennen oder zu verhindern. Hier sind vor allem die optischen Systeme zu nennen, die mit passiven Verfahren (kamerabasiert) oder mit aktiven Verfahren (LASER-Vermessung der Umgebung) versuchen, die Fahrbahn sowie die Fahrbahnbegrenzungen zu identifizieren und in Wechselwirkung mit dem Insassen oder mit Hilfe eines aktiven Lenksystems und Steuersystemen ein Verlassen der Fahrbahn zu verhindern.

Andere Verfahren versuchen dagegen schon die Ursache für das Verlassen der Fahrbahn zu bekämpfen. Hier sind insbesondere die Systeme zu nennen, die im Bereich der Fahrerüberwachung ansetzen. Eine häufige Ursache für das Verlassen der Fahrbahn ist das Einschlafen des Fahrers am Steuer, sei es durch Übermüdung oder durch andere Einwirkungen wie Krankheit oder Alkoholgenuss. Eine weitere Klasse an Schutzmaßnahmen ist die Verhinderung eines Verlassens der Fahrbahn durch aktive Sicherheitssysteme, wie z.B. ESP. Solche Sicherheitssysteme greifen beispielsweise dann ein, wenn das Fahrzeug ins Schleudern kommt.

Eine andere Klasse sind bauliche Maßnahmen am Straßenrand. Hier sind in erster Linie Leitplanken zu nennen, die am Straßenrand oder zwischen zwei Fahrspuren mit entgegengesetzter Fahrtrichtung errichtet werden.

Im Bereich der Fahrwerkstechnik sind zunehmend sogenannte aktive "Fahrwerke" verbreitet. Bei diesen Systemen wird eine Anpassung des Fahrwerks an das Fahrverhalten und den Straßenzustand über eine Regelstrecke erreicht. Diese besteht typischerweise aus Sensoren, welche für jede Radaufhängung die Einfedergeschwindigkeit messen. Mit Hilfe dieser Information werden in einem Steuergerät Parameter bestimmt, die wiederum über Ventile die Dämpfungseigenschaften der Dämpfer anpassen. Ein entsprechendes Fahrdynamik-Regelsystem eines Kraftfahrzeugs ist beispielsweise in der DE 100 50 420 A1 beschrieben.

Im Bereich der Algorithmen zur Unfallerkennung und Crashcharakterisierung existieren Verfahren aus dem Bereich der statistischen Lernverfahren und kognitiven Systeme bzw. Klassifikationsverfahren, z.B. K-Nearest Neighborhood-Klassifikator, Support Vector Machine, Hidden Markov Verfahren und Vektor Quantisierung.

Auch sind Verfahren zum automatischen Korrigieren einer Zustandsgröße eines Fahrzeugs beim Verlassen einer vorgegebenen Fahrbahn bekannt. Dabei kann für den Fall, dass das Fahrzeug die vorgegebene Fahrbahn verlassen hat, ein Fahrzeugregelsystem im Fahrzeug in der Weise umparametriert werden, dass ein vom Fahrer vorgegebener Eingriff in reduzierter Weise in eine Änderung einer Fahrzeugzustandsgröße umgesetzt wird. Dies soll ein zu starkes Gegensteuern des Fahrers verhindern, so dass ein "Aufschaukeln" des Fahrzeugs verhindert wird.

Aus der DE 10 2005 003 177 A1 ist bekannt, dass für den Fall, dass die korrekte Fahrspur verlassen wird, ein Gegenlenkmoment im Lenksystem des Fahrzeugs erzeugt werden kann, das dem durch den Fahrer aufgebrachten Lenkwinkel entgegenwirkt. Dies kann zur Verhinderung von Fahrzeugunfällen beitragen. Derartige Spurhaltesysteme (Lane Keeping Assist) zielen darauf ab, das Fahrzeug zur Unfallvermeidung in der vorgegebenen Fahrspur zu halten bzw. wieder in die Fahrspur zu bringen. Voraussetzung hierfür ist eine aufwändige Sensorik. Über die Sensorik kann die aktuelle Fahrzeugposition in Bezug auf die Fahrbahn permanent überwacht und im Falle eines unzulässigen Abweichens von der Solltrajektorie ein entsprechendes Gegenlenkmoment erzeugt werden.

Gemäß eines aus der DE 195 06 364 C2 bekannten Fahrzeugsteuersystems wird mithilfe einer Navigationseinrichtung die aktuelle Fahrzeugposition bestimmt. Die Fahrgeschwindigkeit kann durch eine automatische Bremsung und die Fahrzeugposition kann durch selbsttätiges Einstellen des Lenkdrehmoments bzw. des Lenkwinkels korrigiert werden, so dass das Fahrzeug beispielsweise eine Kurve sicher durchfahren kann.

In der Funktion "Early Pole Crash Detection" wird bei Erkennen eines Schleudervorgangs durch das ESP Steuergerät die Plausibilität und/oder eine Schwellenanpassung für die Auslösung der Seitenrückhaltemittel vereinfacht. Auf diese Weise wird eine schnellere Auslösung derselben ermöglicht.

Die bisher bekannten Verfahren weisen einige Mängel auf. Kamera- und LASER-basierten Verfahren bieten zwar die Möglichkeit der vorausschauenden Erkennung des Gefahrenzustandes "Verlassen der Fahrbahn", leiden jedoch unter der heutzutage noch nicht ausreichend gegebenen Zuverlässigkeit. So haben die kamerabasierten Verfahren noch einige Probleme bei unzureichender Beleuchtung sowie schlechten und undeutlichen Fahrbahnmarkierungen. Das gleiche gilt für die Laser-basierten Systeme. Aus diesem Grund werden diese Verfahren noch nicht in Großserie produziert und eingesetzt. Zusätzlich sind solche Systeme mit sehr hohen Kosten verbunden

Im Bereich der Einschlaferkennung sind verschieden Systeme angedacht. Es gibt aber auch hier noch keine Marktdurchdringung. Der Hauptnachteil solcher Systeme besteht darin, dass nur eine der Ursachen erkannt wird, die zum Verlassen der Fahrbahn führt.

Das ESP System kann das Verlassen der Fahrbahn aufgrund von unkontrollierten Fahrzuständen vermeiden, in dem es die in diesem Fall gegebene Ursache, nämlich den Verlust der Kontrolle über das Fahrzeug verhindert. Kommt das Fahrzeug jedoch ohne Schleudervorgang, z.B. durch Untätigkeit des Fahrers von der Straße ab, so wird das System nicht ansprechen und somit auch keinen Schutz liefern.

Bauliche Maßnahmen haben durchgehend den Nachteil des hohen Aufwandes (Planung, Genehmigung) und der hohen Kosten (Anschaffung, Unterhalt, Reparatur). Außerdem können bauliche Maßnahmen sogar zu einer erhöhten Gefährdung anderer Verkehrsteilnehmer, wie z.B. der Motorradfahrer führen.

EP 1 582 440 A2 offenbart ein Verfahren zur Erkennung eines gefährlichen Fahrzustandes eines sich auf einer Fahrbahn befindlichen Fahrzeugs, das die folgenden Schritte umfasst: Empfangen eines ersten Signals, wobei das erste Signal geeignet ist, um einen zeitlichen Verlauf einer Vertikalbewegung eines ersten Rads des Fahrzeugs abzubilden; Auswerten des ersten Signals gemäß einer Auswertevorschrift, um aus dem ersten Signal einen ersten Wahrscheinlichkeitswert für ein seitliches Verlassen des ersten Rades von der Fahrbahn zu erhalten; und Bereitstellen eines Auswertesignals, das ausgebildet ist, um abhängig von dem ersten Wahrscheinlichkeitswert ein Verlassen des Fahrzeugs von der Fahrbahn anzuzeigen.

Vor diesem Hintergrund wird mit der vorliegenden Erfindung ein Verfahren zur Erkennung eines gefährlichen Fahrzustandes eines sich auf einer Fahrbahn befindlichen Fahrzeugs, weiterhin ein Steuergerät, das dieses Verfahren verwendet, ein entsprechendes Computerprogrammprodukt sowie schließlich eine Vorrichtung zur Erkennung eines gefährlichen Fahrzustandes eines Fahrzeugs gemäß den unabhängigen Patentansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass eine Erkennung des Fahrzustandes "Verlassen der befestigten Fahrbahn" basierend auf charakteristischen Signalmustern von einem oder einer Mehrzahl von Sensoren möglich ist. Die Sensoren können beispielsweise in den Dämpfern der vier Radaufhängungen des Fahrzeuges angeordnet sein. Auf diese Weise kann der Fahrzustand "Verlassen der befestigten Fahrbahn" unabhängig von vorausschauenden Systemen wie z.B. Kameras erkannt werden und zum Schutz des Fahrzeuges und der Insassen in nachgeschalteten Anwendungen und Vorrichtungen eingesetzt werden.

Der erfindungsgemäße Ansatz ermöglicht eine frühzeitige Detektion des Fahrzustandes "Verlassen der befestigten Fahrbahn". Als Folge ist eine frühzeitige Aktivierung von Gegenmaßnahmen oder Insassenschutzmaßnahmen möglich. Gegenmaßnahmen können beispielsweise das Aufwecken des Fahrers oder die Lenkung der Aufmerksamkeit des Fahrers auf den gefährlichen Fahrzustand umfassen. Insassenschutzmaßnahmen können beispielsweise eine Aktivierung oder

Modifikation der Ansteuerung von reversiblen oder nicht reversiblen Insassenschutzmitteln wie Gurtstraffer oder Airbag umfassen. Auch können fahrzeugbezogene, gefahrenmindernde Maßnahmen, wie z.B. eine Einleitung einer Notbremsung oder eine Unterstützung von stabilisierenden Lenkbewegungen durch die frühzeitige Detektion des gefährlichen Fahrzustandes frühzeitig eingeleitet werden.

Ein Vorteil der Erfindung besteht darin, dass die Erkennung des Fahrzustandes "Verlassen der befestigten Fahrbahn" selbstständig, ohne die Verwendung weiterer Systeme durchgeführt werden kann.

Ein auf dem erfindungsgemäßen Ansatz basierendes System kann im Verbund mit anderen Systemen betrieben werden. Vorteilhafterweise kann dabei ein unabhängiger Signalpfad gegenüber Radar oder optischen Systemen dargestellt werden. Somit können derartige Systeme in ihrer Aussage gestützt werden.

Ein wesentlicher Vorteil dieser Erfindung besteht in der Mehrnutzung von Sensoren, die bereits in intelligenten Dämpfern eines Fahrzeugs vorgesehen werden. Dadurch ergibt sich die Möglichkeit die Systembereiche Rückhaltesystem und Fahrwerk zu kombinieren.

Ebenfalls von Vorteil ist es, dass die Information im Zuge von Kostenreduktion im Airbagsteuergerät zur Verfügung stehen kann, da eine Anbindung der Dämpfer an das Airbagsteuergerät möglich ist. Damit ist kein zusätzlicher Aufwand an Hardware notwendig. Die Abtastung kann im 1 ms Bereich erfolgen, so dass die Information auch für Rückhaltesystemanwendungen ausgewertet werden kann. Dadurch ergeben sich ein Mehrnutzen für das Dämpfersystem und ein Kompetenzaufbau für das Rückhaltesystem.

Weiterhin ist es von Vorteil, dass die Information auch für andere Rückhaltesystemfunktionen wie beispielsweise die Rollover-Sensierung verwendet werden kann. Beispielsweise kann ein Abkommen von der Fahrbahn ohne Schleudervorgang eine Indikation dafür sein, dass möglicherweise ein Überrollvorgang stattfindet, z.B. an einer Böschung.

Das erfindungsgemäße System hat auch den Vorteil, dass es sich nicht in den Ursachen einschränkt, die zum Verlassen der Fahrbahn führen, sondern das Verlassen der Fahrbahn "an sich" erkennt.

Insbesondere ist das erfindungsgemäße System bereits geeignet, um in Serie produziert zu werden und zwar zu signifikant günstigeren Kosten als alternative Systeme, die eine geringere Spezialisierung auf den betrachteten Anwendungsfall aufweisen.

Insgesamt sind die Vorteile der Erfindung in der Bereitstellung der Information "Verlassen der befestigten Fahrbahn" zu relativ geringen Zusatzkosten zu sehen. Damit kann eine solche Information und der daraus mögliche sicherheitstechnische Nutzen einem wesentlich größeren Anwenderkreis zur Verfügung gestellt werden als dies bei bisherigen Verfahren möglich ist.

Die vorliegende Erfindung schafft ein Verfahren zur Erkennung eines gefährlichen Fahrzustandes eines sich auf einer Fahrbahn befindlichen Fahrzeugs, das die folgenden Schritte umfasst: Empfangen eines ersten Dämpfersignals über eine Schnittstelle, wobei das erste Dämpfersignal geeignet ist, um einen zeitlichen Verlauf einer Vertikalbewegung eines ersten Rads des Fahrzeugs abzubilden; Auswerten des ersten Dämpfersignals gemäß einer Auswertevorschrift, um aus dem ersten Dämpfersignal einen ersten Wahrscheinlichkeitswert für ein seitliches Verlassen des ersten Rades von der Fahrbahn zu erhalten; und Bereitstellen eines Auswertesignals, das ausgebildet ist, um abhängig von dem ersten Wahrscheinlichkeitswert ein Verlassen des Fahrzeugs von der Fahrbahn anzuzeigen.

Bei der Fahrbahn kann es sich um eine befestigte Fahrbahn, beispielsweise eine asphaltierte Straße handeln. Bei dem gefährlichen Fahrzustand kann es sich insbesondere um ein ungewolltes Abkommen des Fahrzeugs von der Fahrbahn handeln. Dabei können eines oder mehrere der Räder des Fahrzeugs von der Fahrbahn abkommen und sich in einem neben der Fahrbahn befindlichen Bereich befinden. Das Dämpfersignal kann ein Signal eines Sensors repräsentieren, der ausgebildet ist, um die Vertikalbewegung des Rades direkt oder indirekt zu erfassen. Das Dämpfersignal kann beispielsweise ein Einfedern und Ausfedern des Rades an der Radaufhängung über einen vorbestimmten Zeitraum darstellen. Die Auswertevorschrift kann ein oder eine Mehrzahl von Kriterien aufweisen, basierend auf denen eingeschätzt werden kann, ob sich das Rad auf oder außerhalb der befestigten Fahrbahn befindet. Der erfindungsgemäß Ansatz macht sich dabei zu nutze, dass die Frequenz und Amplitude der Vertikalbewegungen des Rads beim Verlassen und neben der Fahrbahn höher ist, als wenn sich das Rad auf der Fahrbahn befindet. Der Wahrscheinlichkeitswert kann die durch die Auswertevorschrift erhaltene Beurteilung des Dämpfersignals aufweisen. Insbesondere kann der Wahrscheinlichkeitswert anzeigen, dass gemäß der Auswertevorschrift angenommen wird, dass das Rad die Fahrbahn verlassen hat. Aus dem Wahrscheinlichkeitswert kann das Auswertesignal gemäß einer Bestimmungsvorschrift bestimmt werden. Das Auswertesignal kann das Verlassen des Fahrzeugs von der Fahrbahn anzeigen und beispielsweise zum Auslösen einer Warnung an den Fahrer, zur Ansteuerung von Insassenschutzmitteln oder fahrzeugbezogener gefahrenmindernder Maßnahmen bereitgestellt werden.

Gemäß einer Ausgestaltung kann das erfindungsgemäße Verfahren ferner die folgenden Schritte umfassen: Empfangen eines zweiten Dämpfersignals über die Schnittstelle, wobei das zweite Dämpfersignal geeignet ist, um einen zeitlichen Verlauf einer Vertikalbewegung eines zweiten Rads des Fahrzeugs abzubilden; Auswerten des zweiten Dämpfersignals gemäß der Auswertevorschrift, um aus dem zweiten Dämpfersignal einen zweiten Wahrscheinlichkeitswert für ein seitliches Verlassen des zweiten Rades von der Fahrbahn zu erhalten; und Bereitstellen des Auswertesignals, das ausgebildet ist, um abhängig von dem ersten Wahrscheinlichkeitswert und dem zweiten Wahrscheinlichkeitswert das Verlassen des Fahrzeugs von der Fahrbahn anzuzeigen. Indem die Signalverläufe von zwei Rädern berücksichtigt werden, kann der Fahrzustand "Verlassen der Fahrbahn" mit höherer Genauigkeit ermittelt werden. Bei dem ersten Rad kann es sich um ein Vorderrad und bei dem zweiten Rad um ein Hinterrad des Fahrzeugs handeln.

Beispielsweise kann das Auswertesignal ausgebildet sein, um das Verlassen der Fahrbahn anzuzeigen, wenn der erste Wahrscheinlichkeitswert auf das Verlassen des ersten Rades von der Fahrbahn hindeutet und der zweite Wahrscheinlichkeitswert innerhalb einer vorbestimmten Zeitspanne, nachdem der erste Wahrscheinlichkeitswert auf das Verlassen hindeutet, auf das Verlassen des zweiten Rades von der Fahrbahn hindeutet. Somit kann der Umstand berücksichtigt werden, dass im normalen Fahrzustand zuerst das Vorderrad und anschließend das sich auf der gleichen Fahrzeugseite befindliche Hinterrad die Fahrbahn verlässt. Dadurch kann eine Fehlentscheidung vermieden werden.

Gemäß einer Ausgestaltung kann das erfindungsgemäße Verfahren einen Schritt des Empfangens einer Information über eine Fahrzeuggeschwindigkeit über die Schnittstelle und einen Schritt des Bestimmens eines Eintrittswinkels des Fahrzeugs in eine Fahrbahnbegrenzung, basierend auf der Information über die Fahrzeuggeschwindigkeit und einer Zeitdauer zwischen einem Hindeuten des ersten Wahrscheinlichkeitswerts auf das Verlassen des ersten Rades von der Fahrbahn und einem Hindeuten des zweiten Wahrscheinlichkeitswerts auf das Verlassen des zweiten Rades von der Fahrbahn umfassen. Somit kann eine Abgrenzung zum Offroad-Einsatz des Fahrzeugs geschaffen werden.

Die Auswertevorschrift kann ausgebildet sein, um das Dämpfersignal mit einem vorbestimmten Vergleichswert zu vergleichen, um den Wahrscheinlichkeitswert zu erhalten. Dies ermöglicht eine einfache und kostengünstige Klassifikation des Dämpfersignals.

Auch kann die Auswertevorschrift ausgebildet sein, um basierend auf dem Dämpfersignal einen Mittelwert und/oder eine Streuung der Vertikalbewegung des Rades innerhalb eines vorbestimmten Zeitintervalls mit dem vorbestimmten Vergleichswert zu vergleichen. Durch die Nutzung de Mittelwerts und der Streuung können kurzfristige Störungen, beispielsweise aufgrund von Fahrbahnunebenheiten oder Schlaglöchern unterdrückt werden.

Gemäß einer weiteren Ausgestaltung kann das erfindungsgemäße Verfahren einen Schritt des Empfangens einer Fahrdynamikinformation des Fahrzeugs über die Schnittstelle umfassen und das Auswertesignal kann ausgebildet sein, um das Verlassen des Fahrzeugs ferner basierend auf der Fahrdynamikinformation anzuzeigen. Somit kann beispielsweise die Fahrzeuggeschwindigkeit, die Gierrate oder die Querbeschleunigung des Fahrzeugs bei der Auswertung berücksichtigt werden.

Das Auswertesignal kann unter Einsatz eines Klassifizierungsverfahrens bereitgestellt werden. Beispielsweise kann das Klassifizierungsverfahren ausgebildet sein, um basierend auf zeitlich vorangegangenen Dämpfersignalen und zeitlich vorangegangenen Fahrdynamikinformationen einen Klassifikator zu bestimmen, der das Verlassen des Fahrzeugs von der Fahrbahn anzeigt. Das Klassifizierungsverfahren ermöglicht die Anwendung von Verfahren der statistischen Lerntheorie. Auf diese Weise kann die Gefahr von Fehlentscheidungen weiter vermindern werden.

Auch durch die Ausführungsvariante der Erfindung in Form eines Steuergeräts kann die der Erfindung zugrunde liegende Aufgabe schnell und effizient gelöst werden. Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die vorliegende Erfindung schafft ferner eine Vorrichtung zur Erkennung eines gefährlichen Fahrzustandes eines sich auf einer Fahrbahn befindlichen Fahrzeugs, mit folgenden Merkmalen: mindestens einem Sensor, der ausgebildet ist, um einen zeitlichen Verlauf einer Bewegung eines Rads, also z.B. einer Vertikalbewegung eines Rades des Fahrzeugs zu erfassen und als Dämpfersignal bereitzustellen; und einem Steuergerät gemäß der vorliegenden Erfindung, das ausgebildet ist, um das Dämpfersignal zu empfangen. Somit wird erfindungsgemäß auch ein System bereitgestellt, das alleine oder in Kombination mit weiteren Systemen die Erkennung eines gefährlichen Fahrzustandes ermöglicht.

Die Erfindung wird nachstehend anhand der beigefügten Zeichnungen beispielhaft näher erläutert. Es zeigen:
- Fig. 1: eine Darstellung eines Dämpferkolbens;
- Fig. 2: eine Darstellung einer Dämpferkolbenmechatronik;
- Fig. 3: ein Ablaufdiagramm eines Verfahrens, gemäß einem Ausführungsbeispiel der Erfindung; und
- Fig. 4: ein Ablaufdiagramm eines erfindungsgemäßen Verfahrens, gemäß einem Ausführungsbeispiel der Erfindung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

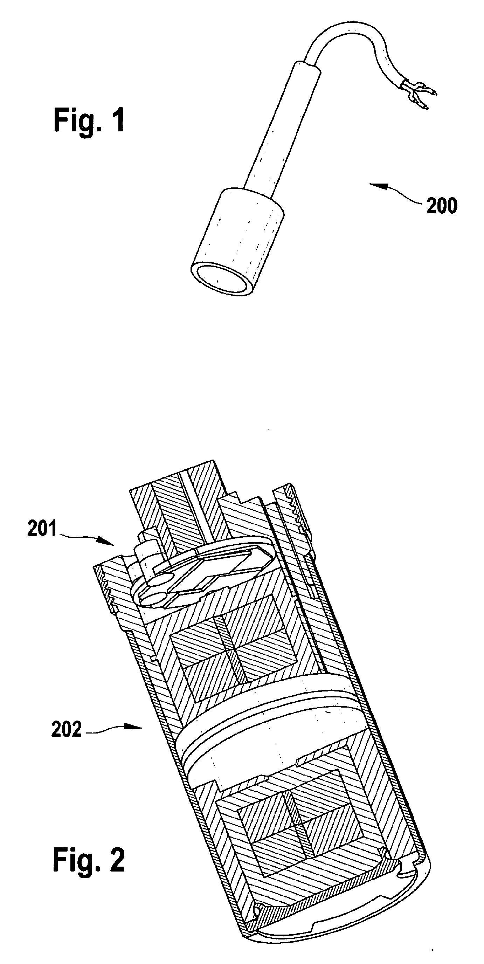

Fig. 1 zeigt eine Darstellung eines intelligenten Dämpfers 200. Der intelligente Dämpfer 200 weist Sensoren auf. Diese Sensoren können ein für den erfindungsgemäßen Ansatz geeignetes Dämpfersignal bereitstellen.

Fig. 2 zeigt eine Darstellung der Mechatronik des in Fig. 1 gezeigten Dämpfers, gemäß einem Ausführungsbeispiel der Erfindung. Gezeigt sind eine Kontrolleinheit 201 mit einem oder mehreren Drucksensoren sowie einem oder mehreren unabhängig steuerbaren Ventilen 202 für Kompression und Zurückfedern. Die Ventile 202 können kontinuierlich einstellbar sein. Die Schaltzeit ist minimiert und es ist eine große Bandbreite der Dämpfungscharakteristik gegeben. Der Dämpfereinsatz kann sowohl bei Einrohr- Standarddämpfern als auch bei Zweirohr-Standarddämpfem eingesetzt werden.

Der erfindungsgemäße Ansatz erfordert im Bereich der Sensorausstattung keine Erweiterungen gegenüber mit intelligenten Dämpfern ausgestatteten Fahrzeugen. Bei den in den Figuren 1 und 2 gezeigten Dämpfern sind in jedem Dämpferelement ein oder mehrere Drucksensoren vorgesehen. Die Drucksensoren können als Datenprodukt die Messgröße "Einfedergeschwindigkeit" produzieren. Die von vier Rädern stammenden mindestens vier Messgrößen können erfindungsgemäß einem Auswertealgorithmus zugeführt werden. Zusätzlich können noch andere Sensordaten berücksichtigt werden. Der Auswertealgorithmus kann entscheiden, ob der Zustand "Fahrzeug verlässt die befestigte Fahrbahn" eingetreten ist oder nicht.

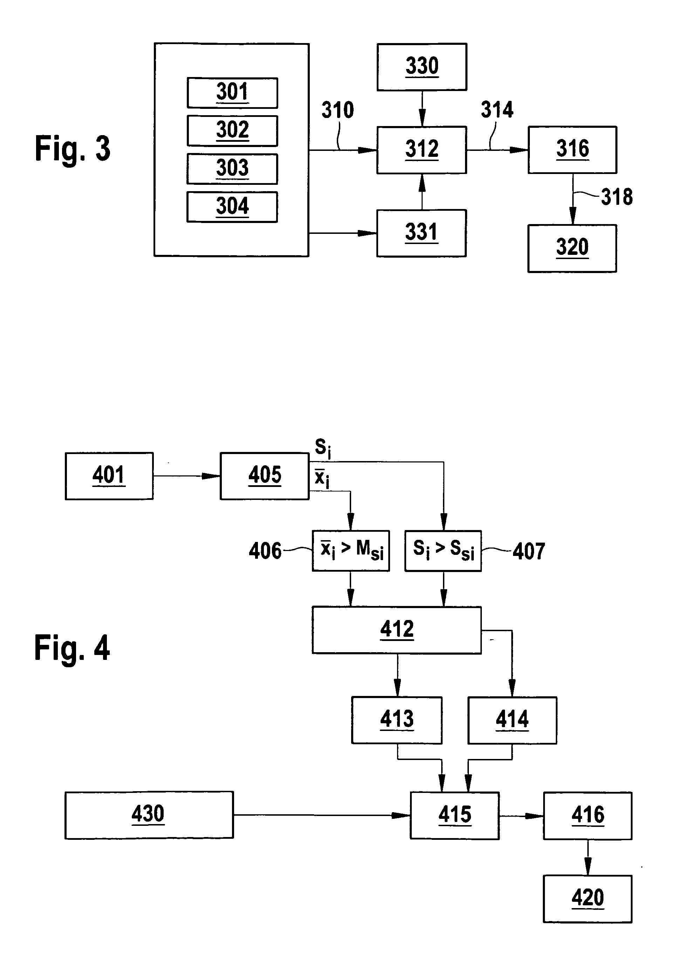

Fig. 3 zeigt ein Ablaufdiagramm eines Verfahrens zur Erkennung eines gefährlichen Fahrzustandes eines Fahrzeugs, gemäß einem Ausführungsbeispiel der vorliegenden Erfindung. Gezeigt sind ein erster Sensor 301, ein zweiter Sensor 302, ein dritter Sensor 303 und ein vierter Sensor 304. Bei den Sensoren 301, 302, 303, 304 kann es sich um Dämpfersensoren handeln. Die Sensoren 301, 302, 303, 304 können jeweils ausgebildet sein, um einen zeitlichen Verlauf einer Vertikalbewegung eines Rads des Fahrzeugs abzubilden und als Dämpfersignal 310 an einen Auswertealgorithmus 312 bereitzustellen. Beispielsweise kann das Dämpfersignal eine Einfedergeschwindigkeit der, den Sensoren 301, 302, 303, 304 zugeordneten Dämpfer darstellen. Der Auswertealgorithmus 312 kann ausgebildet sein, um das Dämpfersignal 310 gemäß einer Auswertevorschrift auszuwerten, um aus dem Dämpfersignal 310 einen Wahrscheinlichkeitswert 314 für ein Verlassen der den Sensoren 301, 302, 303, 304 zugeordneten Räder zu erhalten. Aus dem Wahrscheinlichkeitswert 314 kann von einer Einrichtung 316 bestimmt werden, ob ein Verlassen der befestigten Fahrbahn vorliegt oder nicht vorliegt. Von der Einrichtung 316 kann ein Auswertesignal 318 an eine Einrichtung 320 zur weiteren Verwendung bereitgestellt werden. Das Auswertesignal 318 kann ausgebildet sein, um das Verlassen des Fahrzeugs von der Fahrbahn anzuzeigen.

Gemäß dem in Fig. 3 gezeigten Ausführungsbeispiel können neben den Daten 310 über die Einfedergeschwindigkeit der Dämpfersensoren 301, 302, 303, 304 zusätzlich noch eine Fahrzeuggeschwindigkeit 330 und ein Ausgabe der Fahrwerksregelung 331 im Auswertealgorithmus 312 verwendet werden. Die Fahrzeuggeschwindigkeit 330 und die Ausgabe der Fahrwerksregelung 331 können von weiteren Sensoren oder Steuergeräten bereitgestellt werden. Insbesondere kann die Ausgabe der Fahrwerksregelung 331 von den Dämpfersensoren 301, 302, 303, 304 erfolgen.

Fig. 4 zeigt ein Ablaufdiagramm einer Umsetzung des Verfahrens zur Erkennung eines gefährlichen Fahrzustandes eines Fahrzeugs, gemäß einem Ausführungsbeispiel der vorliegenden Erfindung. Dabei ist eine erste mögliche algorithmische Verarbeitung gezeigt.

Gezeigt ist ein Sensor 401, der stellvertretend für einen Sensor i, mit i = 1, 2, 3, 4 steht. Der Sensor 401 ist ausgebildet, um ein Signal an einen Filter 405 bereitzustellen. Der Filter 405 ist ausgebildet, um einen Mittelwert des Signals des jeweiligen Sensors 401 an eine Vergleichseinrichtung 406 und eine Streuung des Signals des jeweiligen Sensors 401 an eine Vergleichseinrichtung 407 bereitzustellen. Die Vergleichseinrichtungen 406, 407 sind ausgebildet, um jeweils ein Vergleichsergebnis an eine Logik 412, beispielsweise eine UND-Verknüpfung, bereitzustellen. Trifft die Logik 412 eine positive Entscheidung "ja", so wird in einer Setzeinrichtung 413 ein Merker i = 1 gesetzt. Der Merker i ist dabei dem i-ten Sensor 401 zugeordnet. Trifft die Logik 412 eine negative Entscheidung "nein", so wird in einer Setzeinrichtung 414 der Merker i = 0 gesetzt. Der Wert des Merkers i wird an eine Logik 415 bereitgestellt. Die Logik 415 kann bei einer positiven Entscheidung "ja" die Information 416 "Fahrbahn verlassen" an eine Anwendung 420 bereitstellen. Um die Entscheidung zu treffen, kann die Logik 415 ferner ausgebildet sein, um Fahrdynamikdaten 430 zu empfangen und bei der Auswertung zu berücksichtigen.

Gemäß einem Ausführungsbeispiel können für jeden der i Sensoren 401 innerhalb eines vorgegebenen Zeitfensters der Länge t die statistischen Messgrößen Mittelwert M und Streuung S berechnet werden. Ist der Untergrund eben, so wird die Streuung um den Mittelwert gering ausfallen. ist der Untergrund hingegen uneben, wie es häufig bei einem unbefestigten Fahrbahnrand der Fall ist, so wird die Streuung um den Mittelwert grösser sein. Jeder der errechneten Werte kann nun mit einem zugeordneten einstellbaren Schwellenwert Mₛ und Sₛ verglichen werden. Dies kann in den Vergleichseinrichtungen 406, 407 erfolgen. Werden beide Schwellenwerte überschritten, kann ein Merker für das diesem Sensor zugeordnete Rad gesetzt werden. Alternativ kann in einer alternativen Umsetzung der Merker gesetzt werden, wenn einer von beiden Schwellenwerten überschritten wird. Das Setzen der Merker kann in den Setzeinrichtungen 413, 414 erfolgen. Falls die Bedingung, die zum Setzen des Merkers geführt hat nicht mehr erfüllt wird, kann der Merker wieder gelöscht werden. Sofern nun bei einem der beiden vorderen Räder dieser Merker gesetzt ist und innerhalb eines vorgegeben Zeitfensters für das jeweils dahinter liegende Rad der entsprechende Merker auch gesetzt ist, kann mit ziemlicher Sicherheit darauf geschlossen werden, dass das Fahrzeug gerade die befestigte Fahrbahn verlässt. Dabei wird sichergestellt, dass aufgrund des Aktivierungsmusters keine Fehlentscheidung getroffen wird. Somit kann beispielsweise eine Fehlentscheidung vermieden werden, wenn zuerst eine Aktivierung des hinteren Rades erfolgt, das Fahrzeug im normalen Fahrbetrieb ist und keine Tendenz zum Übersteuern vorliegt. Ähnliche Situationen können über die Logik 415 abgefangen werden, beispielsweise indem weitere fahrdynamische Größen 430 wie die Gierrate überprüft werden. Daher können in einem weiteren Verarbeitungsschritt Fahrzeugdaten wie die Fahrzeuggeschwindigkeit, die Gierrate oder die Querbeschleunigung bei der Entscheidung berücksichtigt werden. Ebenfalls lassen sich auch andere Sensorinformationen wie beispielsweise von einer Schwimmwinkelsensorik bei der Entscheidung integrieren.

Gemäß einem weiteren Ausführungsbeispiel kann der Eintrittswinkel bestimmt werden, in dem das Fahrzeug in einen außerhalb der Fahrbahn liegenden Bereich eintritt. Der Winkel unter dem das Fahrzeug die Fahrbahn verlässt kann zusätzlich unter Verwendung der Fahrzeuggeschwindigkeit und der Verwendung eines bekannten geometrischen Radabstandes bestimmen.

Zusätzlich lässt sich auch eine Sicherheitsabfrage einbauen. Liegt die Fahrzeuggeschwindigkeit unterhalb eines vorgebbaren Niveaus, kann die Information "Fahrzeug verlässt die vorgegebene Fahrbahn" als unwichtig verworfen werden, da ein Verlassen der Fahrbahn bei geringen Fahrzeuggeschwindigkeiten im Allgemeinen keine negativen Folgen nach sich zieht.

Zusätzlich können noch die Schwellenwerte mit denen die Werte des Mittelwerts M und der Streuung S verglichen werden und das Zeitfenster in dem die Werte M und S verglichen werden, als Funktion der Fahrzeuggeschwindigkeit betrachtet werden. Bei einer gegebenen Bodenunebenheit wird die Schwankung um den Mittelwert mit zunehmender Fahrzeuggeschwindigkeit zunächst zunehmen um dann, bei noch höherer Geschwindigkeit wieder abzunehmen. Als weiteres Merkmal kann auch die Ausgabe der Fahrwerksregelung mit in die Betrachtung einbezogen werden. Durch die Rückkopplungsschleife wird bei Fahrzeugen mit aktivem Fahrwerk die Fahrwerkseigenschaften verändert und damit auch die Eigenschaften der Messsignale. Dieser Effekt kann gegebenenfalls in einem Auswertealgorithmus durch Korrekturfaktoren berücksichtigt werden.

Statt oder in Ergänzung der Werte des Mittelwerts M und der Streuung S können auch andere Merkmale, die aus den Sensordaten ableitbar sind, verwendet werden. Beispielsweise kann die Signalenergie, der Absolutbetrag und ähnliches verwendet werden. Desweiteren kann aus diesen Merkmalen das erste oder ein höheres Integral oder die erste oder eine höhere Ableitung verwendet werden, die jeweils auf die Zeit oder auf eines der anderen Merkmale bezogen sind.

Gemäß einem weiteren Ausführungsbeispiel kann das erfindungsgemäße Verfahren unter Anwendung von Verfahren aus der statistischen Lerntheorie ausgeführt werden. Bei der statistischen Lerntheorie wird typischerweise ein sogenannter Klassifikator mit vorgegebenen Datensätzen eingestellt (trainiert). Die Datensätze bestehen dabei beispielsweise aus den vier Sensordaten der in Fig. 3 gezeigten Sensoren 301, 302, 303, 304 und beispielsweise der Fahrzeuggeschwindigkeit 330 (ganz allgemein im Folgenden als "Merkmale" bzw. Merkmalsraum bezeichnet). Für verschiedene Fahrsituationen, wie z.B. normales Fahren, Fahren auf unebener Fahrbahn, Abkommen von der Straße bei hoher Geschwindigkeit, Abkommen von der Straße bei niedriger Geschwindigkeit usw. werden nun diese Daten aufgezeichnet und entsprechend der vorgegebenen Frage in zwei Klassen "Normalfahrt" und "Verlassen der befestigten Fahrbahn" eingeteilt. Mit Hilfe dieses so entstandenen Trainingsdatensatzes kann ein Klassifizierungsverfahren wie z.B. k-Nearest Neighborhood, Support Vector Machine oder ein ähnliches Verfahren entsprechend der Anforderung des jeweiligen Verfahrens trainiert und in einem Steuergerät implementiert werden. Ein auf diese Weise trainierter Klassifikator kann daraufhin im Anwendungsfall im Fahrzeug, also in jeder Fahrsituation, alle gemessenen Merkmale entsprechend des gelernten Verhaltens in Echtzeit einer der beiden Klassen zuordnen. Falls dann ein Ereignis der Klasse "Verlassen der befestigten Fahrbahn" zugeordnet wird, ist die Gefahrensituation erkannt und kann als Information weiterverwendet werden. Der Vorteil der Verwendung von Verfahren aus der statistischen Lerntheorie besteht in der Flexibilität ihrer Anwendung. Sollten Daten anderer Messprinzipien und anderer Sensordaten verfügbar sein, so können diese Daten ohne Veränderung des Klassifikationsprinzips und des Trainingsverfahrens durch einfache Erweiterung des Merkmalsraumes in den Entscheidungsalgorithmus integriert werden. Beispiele für solche Sensordaten (Merkmale) können Messwerte des jeweiligen Reifendrucks, Fahrzeugquerbeschleunigungen, Fahrzeuggierraten oder andere sein. Ebenso ist es möglich, mit einem solchen Verfahren Daten aus Kamera- oder LASER-Systemen in den Entscheidungsprozess einzubinden. Daraus abgeleitete Merkmale, wie z.B. Beschaffenheit des Randstreifens können als numerischer Wert kodiert und als weiteres Merkmal zur Situationsklassifikation verwendet werden.

Ein weiterer Vorteil des Klassifikationsverfahrens ist die automatische Applizierbarkeit des Entscheidungsalgorithmus auf verschiedene Fahrzeuge und Fahrwerke. Sofern ein geeigneter Trainingsdatensatz vorhanden ist, verläuft die Einstellung des Klassifikators vollautomatisch, ohne subjektive geprägte manuelle Eingriffe eines Applikateurs. Das Klassifikationsergebnis kann zur Erhöhung der Insassen und Fahrzeugsicherheit angewendet werden.

Die Gewinnung der Information "der befestigten Fahrbahn" kann den ersten Schritt in einem Sicherheitssystem darstellen. In einem weiteren Schritt kann die Information "der befestigten Fahrbahn" nutzbringend verwendet werden. Vorstellbar sind folgende weiteren Schritte.

Bei Erkennen der Gefahrensituation "Verlassen der Fahrbahn" kann ein reversibles Rückhaltemittel, z.B. ein reversibler Gurtstraffer, angesteuert werden. Durch frühzeitiges Straffen wird einerseits die Aufmerksamkeit des Insassen auf eine mögliche Gefahrensituation gelenkt, andererseits im Falle einer anschließenden Kollision des Fahrzeuges die Schutzwirkung der Rückhaltesysteme verbessert. Andere reversible Insassenschutzmittel können z.B. aktive Sitze und aktive mechanische Strukturelemente sein. Ein Beispiel für aktive Strukturelemente ist z.B. ein Element welches die Seitenstruktur des Fahrzeuges durch Riegelelemente in der Tür versteift, so dass die Intrusion der Struktur im Seitenkollisionsfall geringer ausfällt oder aber eine Anbindung der Tür an die Sitzstruktur.

Eine weitere Möglichkeit besteht in einer Einflussnahme auf einen herkömmlichen Steueralgorithmus für Insassenschutzmittel. Durch die so erhaltene Information kann ein Insassenschutzalgorithmus zur Erzielung einer besseren Schutzwirkung angepasst werden. Beispielsweise kann der Insassenschutzalgorithmus empfindlicher geschaltet werden. Auf diese Weise sind z.B. frühere Auslösezeiten eines Airbags möglich. Dies ist mit einer entsprechend besseren Schutzwirkung für die betroffenen Insassen verbunden, falls eine entsprechende Auslöseschwelle abgesenkt wird. Ferner können bestimmte Insassenschutzmittel gezielt aktiviert oder deaktiviert werden. Eine andere Möglichkeit besteht in der Vereinfachung der als Sicherheitsmechanismus in einem Airbagauslösealgortihmus vorhandenen Plausibilitätsprozedur. Im Falle des Erkennens einer solchen Situation kann auf die herkömmliche Plausibilität verzichtet werden und die Situationserkennung als Ersatzplausibilität dienen. Dadurch kann z.B. bei einem auf ein Verlassen der Fahrbahn folgenden Seitencrash eine schnellere Auslösezeit erzielt werden.

Eine Variation der Einflussnahme auf einen Rückhaltesystemauslösealgorithmus ist möglich, wenn der Auslösealgorithmus schon auf einem Klassifikationisalgorithmus basiert. In diesem Fall kann durch einfache Erweiterung des Merkmalsraumes dieses Algorithmus die Information über das Verlassen der befestigten Straße implizit integriert werden. Zum einen ist es möglich, das Endresultat der ersten Klassifikation, also die Information "Normalfahrt" oder "Verlassen der befestigten Fahrbahn" als neues Merkmal In dem Auslöseklassifikator zu berücksichtigen. Eine weitere technische Umsetzung besteht in einem Verfahren, bei dem die Merkmale (Sensordaten), die bisher dem ersten Klassifikator zur Erkennung des Fahrzustandes zugeführt wurden, nun direkt dem Auslöseklassifikator zur Verfügung gestellt werden. Über den Trainingsdatensatz wird dieser sich in einen solchen inneren Zustand bringen, dass die Information über den Fahrzustand nun in eine Auslöseentscheidung in einer optimalen Art und Weise (im statistischen Sinne) Eingang finden, ohne als solche explizit zur Verfügung zu stehen. Die Sensoren der aktiven Fahrwerkssteuerung werden so zu einem integrierten Bestandteil des passiven Rückhaltesystems.

Ebenso können andere technische Mittel zur Gefahrenverminderung angesteuert werden. Beispiele dafür sind die Einleitung einer automatischen Notbremsung, die Einleitung eines automatischen Lenkmanövers, das Ausstrahlen eines Huptons oder das Aktivieren von bestimmten Kommunikationskanälen, beispielsweise zur Kommunikation mit anderen Fahrzeugen (car2car) oder mit Infrastrukturobjekten (car2infrastructure), usw..

Es ist ebenfalls denkbar eine Vorbefüllung der Bremsanlage durchzuführen. Dadurch kann im Falle einer Bremsanforderung sofort eine Verzögerung eingeleitet werden.

Nach einer Weiterbildung der Erfindung ist es möglich, im Bereich der Steuergeräte die Funktionalitäten für die Rückhaltesystemansteuerung und die aktive Fahrwerksregelung in einem gemeinsamen Steuergerät zusammenzufassen. Dadurch sind die Sensordaten der Dämpfersensoren ohne Mehraufwand für die Ansteuerung von Rückhaltesystemen verfügbar.

## Patentansprüche

1. Verfahren zur Erkennung eines gefährlichen Fahrzustandes eines sich auf einer Fahrbahn befindlichen Fahrzeugs, das die folgenden Schritte umfasst:
Empfangen eines ersten Dämpfersignals (310) über eine Schnittstelle, wobei das erste Dämpfersignal geeignet ist, um einen zeitlichen Verlauf einer Vertikalbewegung eines ersten Rads des Fahrzeugs abzubilden;
Auswerten (312) des ersten Dämpfersignals gemäß einer Auswertevorschrift, um aus dem ersten Dämpfersignal einen ersten Wahrscheinlichkeitswert (314) für ein seitliches Verlassen des ersten Rades von der Fahrbahn zu erhalten; und
Bereitstellen eines Auswertesignals (318), das ausgebildet ist, um abhängig von dem ersten Wahrscheinlichkeitswert ein Verlassen des Fahrzeugs von der Fahrbahn anzuzeigen.

2. Verfahren gemäß Anspruch 1, das ferner die folgenden Schritte umfasst:
Empfangen eines zweiten Dämpfersignals (310) über die Schnittstelle, wobei das zweite Dämpfersignal geeignet ist, um einen zeitlichen Verlauf einer Vertikalbewegung eines zweiten Rads des Fahrzeugs abzubilden;
Auswerten (312) des zweiten Dämpfersignals gemäß der Auswertevorschrift, um aus dem zweiten Dämpfersignal einen zweiten Wahrscheinlichkeitswert (314) für ein seitliches Verlassen des zweiten Rades von der Fahrbahn zu erhalten; und
Bereitstellen des Auswertesignals (318), das ausgebildet ist, um abhängig von dem ersten Wahrscheinlichkeitswert und dem zweiten Wahrscheinlichkeitswert das Verlassen des Fahrzeugs von der Fahrbahn anzuzeigen.

3. Verfahren gemäß Anspruch 2, bei dem das Auswertesignal (318) ausgebildet ist, um das Verlassen der Fahrbahn anzuzeigen, wenn der erste Wahrscheinlichkeitswert (314) auf das Verlassen des ersten Rades von der Fahrbahn hindeutet und der zweite Wahrscheinlichkeitswert (314) innerhalb einer vorbestimmten Zeitspanne, nachdem der erste Wahrscheinlichkeitswert auf das Verlassen hindeutet, auf das Verlassen des zweiten Rades von der Fahrbahn hindeutet.

4. Verfahren gemäß einem der Ansprüche 2 oder 3, mit einem Schritt des Empfangens einer Information über eine Fahrzeuggeschwindigkeit (330) über die Schnittstelle und einem Schritt des Bestimmens eines Eintrittswinkels des Fahrzeugs in eine Fahrbahnbegrenzung, basierend auf der Information über die Fahrzeuggeschwindigkeit und einer Zeitdauer zwischen einem Hindeuten des ersten Wahrscheinlichkeitswerts (314) auf das Verlassen des ersten Rades von der Fahrbahn und einem Hindeuten des zweiten Wahrscheinlichkeitswerts (314) auf das Verlassen des zweiten Rades von der Fahrbahn.

5. Verfahren gemäß einem der vorangegangenen Ansprüche, bei dem die Auswertevorschrift ausgebildet ist, um das Dämpfersignal (310) mit einem vorbestimmten Vergleichswert zu vergleichen (406, 407), um den Wahrscheinlichkeitswert (314) zu erhalten.

6. Verfahren gemäß Anspruch 5, bei dem die Auswertevorschrift ausgebildet ist, um basierend auf dem Dämpfersignal (310) einen Mittelwert und/oder eine Streuung der Vertikalbewegung des Rades innerhalb eines vorbestimmten Zeitintervalls mit dem vorbestimmten Vergleichswert (406, 407) zu vergleichen.

7. Verfahren gemäß einem der vorangegangenen Ansprüche, mit einem Schritt des Empfangens einer Fahrdynamikinformation (430) des Fahrzeugs über die Schnittstelle und wobei das Auswertesignal (318) ausgebildet ist, um das Verlassen des Fahrzeugs ferner basierend auf der Fahrdynamikinformation anzuzeigen.

8. Verfahren gemäß Anspruch 7, bei dem das Auswertesignal (318) unter Einsatz eines Klassifizierungsverfahrens bereitgestellt wird.

9. Steuergerät um alle Schritte eines Verfahrens gemäß einem der Ansprüche 1 bis 8 durchzuführen.

10. Computerprogrammprodukt mit Programmcode, der auf einem maschinenlesbaren Träger gespeichert ist, zur Durchführung des Verfahrens nach einem der Ansprüche 1 bis 8, wenn das Programm auf einem Steuergerät ausgeführt wird.

11. Vorrichtung zur Erkennung eines gefährlichen Fahrzustandes eines sich auf einer Fahrbahn befindlichen Fahrzeugs, mit folgenden Merkmalen:
mindestens einen Sensor (301, 302, 303, 304), der ausgebildet ist, um einen zeitlichen Verlauf einer Vertikalbewegung eines Rads des Fahrzeugs zu erfassen und als Dämpfersignal (310) bereitzustellen; und
einem Steuergerät gemäß Anspruch 9, das ausgebildet ist, um das Dämpfersignal zu empfangen.

## Claims

1. Method for detecting a dangerous state of travel of a vehicle which is located on a carriageway, comprising the following steps:
reception of a first damper signal (310) via an interface, wherein the first damper signal is suitable for mapping a time profile of a vertical movement of a first wheel of the vehicle;
evaluating (312) the first damper signal according to an evaluation rule, in order to obtain a first probability value (314) for lateral exiting of the first wheel from the carriageway from the first damper signal; and
provision of an evaluation signal (318) which is designed to display exiting of the vehicle from the carriageway as a function of the first probability value.

2. Method according to Claim 1, also comprising the following steps:
reception of a second damper signal (310) via the interface, wherein the second damper signal is suitable for mapping a time profile of a vertical movement of a second wheel of the vehicle;
evaluation (312) of the second damper signal according to the evaluation rule, in order to obtain a second probability value (314) for lateral exiting of the second wheel from the carriageway from the second damper signal; and
provision of the evaluation signal (318) which is designed to display the exiting of the vehicle from the carriageway as a function of the first probability value and the second probability value.

3. Method according to Claim 2, in which the evaluation signal (318) is designed to display the exiting from the carriageway if the first probability value (314) indicates the exiting of the first wheel from the carriageway and the second probability value (314) indicates the exiting of the second wheel from the carriageway within a predetermined time period after the first probability value indicates the exiting.

4. Method according to either of Claims 2 and 3, having a step of receiving information about a vehicle speed (330) via the interface, and a step of determining an angle of entry of the vehicle into a carriageway boundary, based on the information about the vehicle speed, and a time period between indication of the first probability value (314) of the exiting of the first wheel from the carriageway and indication of the second probability value (314) of the exiting of the second wheel from the carriageway.

5. Method according to one of the preceding claims, in which the evaluation rule is designed to compare (406, 407) the damper signal (310) with a predetermined comparison value in order to obtain the probability value (314).

6. Method according to Claim 5, in which the evaluation rule is designed to compare a mean value and/or a variation of the vertical movement of the wheel within a predetermined time interval with the predetermined comparison value (406, 407), on the basis of the damper signal (310).

7. Method according to one of the preceding claims, having a step of receiving vehicle movement dynamics information (430) of the vehicle via the interface, and wherein the evaluation signal (318) is designed also to display the exiting of the vehicle on the basis of the vehicle movement dynamics information.

8. Method according to Claim 7, in which the evaluation signal (318) is provided by using a classification method.

9. Controller for carrying out all the steps of a method according to one of Claims 1 to 8.

10. Computer program product having program code which is stored on a machine-readable carrier, for carrying out the method according to one of Claims 1 to 8 when the program is executed on a controller.

11. Device for detecting a dangerous state of travel of a vehicle which is located on a carriageway, having the following features:
at least one sensor (301, 302, 303, 304) which is designed to detect a time profile of a vertical movement of a wheel of the vehicle and to provide it as a damper signal (310); and
a controller according to Claim 9 which is designed to receive the damper signal.

## Revendications

1. Procédé de détection d'un état de danger relatif à un véhicule en circulation se trouvant sur une voie de circulation, comprenant les étapes suivantes :
réception d'un premier signal d'amortisseur (310) via une interface, le premier signal d'amortisseur étant adapté pour reproduire une courbe en fonction du temps d'un mouvement vertical d'une première roue du véhicule ;
analyse (312) du premier signal d'amortisseur en fonction d'une consigne d'analyse pour obtenir à partir du premier signal d'amortisseur une première valeur de probabilité (314) indiquant si oui ou non la première roue est en train de quitter en côté la voie de circulation ; et
mise à disposition d'un signal d'analyse (318) conçu pour indiquer si oui ou non le véhicule a quitté la voie de circulation en fonction de la première valeur de probabilité.

2. Procédé selon la revendication 1, comprenant en outre les étapes suivantes :
réception d'un deuxième signal d'amortisseur (310) via l'interface, le deuxième signal d'amortisseur étant adapté pour reproduire une courbe en fonction du temps d'un mouvement vertical d'une deuxième roue du véhicule ;
analyse (312) du deuxième signal d'amortisseur en fonction de la consigne d'analyse, pour obtenir à partir du deuxième signal d'amortisseur une deuxième valeur de probabilité (314) indiquant si oui ou non la deuxième roue est en train de quitter en côté la voie de circulation ; et
mise à disposition du signal d'analyse (318) conçu pour indiquer si oui ou non le véhicule a quitté la voie de circulation en fonction de la première valeur de probabilité et de la deuxième valeur de probabilité.

3. Procédé selon la revendication 2, dans lequel le signal d'analyse (318) est conçu pour indiquer une sortie de la voie de circulation lorsque la première valeur de probabilité (314) indique que la première roue a quitté la voie de circulation et que la deuxième valeur de probabilité (314) indique que la deuxième roue a quitté la voie de circulation pendant un intervalle de temps prédéfini suivant la première valeur de probabilité indiquant la sortie de la première roue.

4. Procédé selon l'une quelconque des revendications 2 ou 3, avec une étape de réception d'une information concernant une vitesse du véhicule (330) via l'interface et une étape de détermination d'un angle d'incidence du véhicule dans une limite de voie de circulation, sur la base de l'information relative à la vitesse du véhicule et d'une durée s'écoulant entre l'indication d'une première valeur de probabilité (314) indiquant que la première roue a quitté la voie de circulation et l'indication d'une deuxième valeur de probabilité (314) indiquant que la deuxième roue a quitté la voie de circulation.

5. Procédé selon l'une quelconque des revendications précédentes, dans lequel la consigne d'analyse est conçue pour comparer (406, 407) le signal d'amortisseur (310) à une valeur de comparaison prédéfinie pour obtenir la valeur de probabilité (314).

6. Procédé selon la revendication 5, dans lequel la consigne d'analyse est conçue pour comparer une valeur moyenne et/ou une dispersion du mouvement vertical de la roue pendant un intervalle de temps prédéfini avec une valeur de comparaison (406, 407) prédéfinie sur la base du signal d'amortisseur (310).

7. Procédé selon l'une quelconque des revendications précédentes, avec une étape de réception d'une information de dynamique de conduite (430) du véhicule via l'interface et le signal d'analyse (318) étant conçu pour indiquer que le véhicule a quitté la voie de circulation sur la base en outre de l'information de dynamique de conduite.

8. Procédé selon la revendication 7, dans lequel le signal d'analyse (318) est mis à disposition par le biais de l'utilisation d'un procédé de classement.

9. Appareil de commande permettant de mettre en oeuvre toutes les étapes d'un procédé selon l'une quelconque des revendications 1 à 8.

10. Produit de programme informatique équipé d'un code de programmation mémorisé sur un support lisible par une machine servant à mettre en oeuvre le procédé selon l'une quelconque des revendications 1 à 8, lorsque le programme est installé sur un appareil de commande.

11. Dispositif de détection d'un état de danger relatif à un véhicule en circulation se trouvant sur une voie de circulation, avec les caractéristiques suivantes :
au moins un capteur (301, 302, 303, 304) conçu pour détecter une courbe en fonction du temps d'un mouvement vertical d'une roue du véhicule et pour la mettre à disposition sous la forme d'un signal d'amortisseur (310) ; et
un appareil de commande selon la revendication 9, conçu pour recevoir le signal d'amortisseur.
